Europäisches Patentamt

European Patent Office

Office européen des brevets

(11) Veröffentlichungsnummer: **0 215 406**
**B1**

(12) EUROPÄISCHE PATENTSCHRIFT

(45) Veröffentlichungstag der Patentschrift: **18.07.90**

(21) Anmeldenummer: **86112361.0**

(22) Anmeldetag: **06.09.86**

(51) Int. Cl.⁵: **A 21 B 1/26**

(54) Backofen.

(30) Priorität: **20.09.85 DE 3533589**

(43) Veröffentlichungstag der Anmeldung:
**25.03.87 Patentblatt 87/13**

(45) Bekanntmachung des Hinweises auf die
Patenterteilung:
**18.07.90 Patentblatt 90/29**

(84) Benannte Vertragsstaaten:
**DE FR GB SE**

(56) Entgegenhaltungen:
**DE-A-2 435 138**
**FR-A- 513 858**
**FR-A- 608 689**
**FR-A- 678 761**

(73) Patentinhaber: **AL-KO THERM GmbH**
**Maschinenfabrik**
**D-8876 Jettingen-Scheppach (DE)**

(72) Erfinder: **Pfaudler, Reinhold**
**Innerer Krautgartenweg 13**
**D-8871 Burtenbach (DE)**
Erfinder: **Kanzler, Walter**
**St.-Stephanus-Strasse 18**
**D-8872 Burgau-Unterknöringen (DE)**

(74) Vertreter: **Munk, Ludwig, Dipl.-Ing.**
**Patentanwalt Prinzregentenstrasse 1**
**D-8900 Augsburg (DE)**

Courier Press, Leamington Spa, England.

## Beschreibung

Die Erfindung betrifft einen Backofen, insbesondere einen Sicht- und Duftbackofen, mit einem Gehäuse, das en durch eine Türe verschließbaren Backraum eine über ein mindestens einen Luftschacht hiermit verbunbene, mindestens ein Gebläse und eine Wärmequelle aufweisende Heizeinrichtung umschließt.

Die bekannten Anordnungen dieser Art werden in der Regel durch fest eingebaute Heizstäbe elektrisch beheizt. Die Heizstäbe sind dabei um einen im Bereich der Rückwand des Backraums angeordneten Ventilator herumgelegt. Nachteilig hierbei ist in erster Linie die infolge des festen Einbaus der elektrischen Heizstäbe gegebene Abhängigkeit von der Energiequelle Strom. Dies erfordert infolge der vergleichsweise hohen Aufnahmeleistung vielfach nicht unbeträchtliche Bereitstellungskosten, was sich ungünstig auf die Wirtschaftlichkeit auswirkt.

Aus der DE-A 24 35 138 ist ferner ein Backofen eingangs erwähnter Art bekannt, der mittels eines durch einen Brenner befeuerbaren Heizregisters beheizbar ist. Auch hierbei ist jedoch die Heizeinrichtung fest in den Backofen eingebaut, so daß jedenfalls ein schneller Wechsel von der hier vorgesehenen Befeuerung auf eine elektrische Beheizung nicht möglich ist. Gerade dies wäre jedoch zur Rationalisierung der Herstellung erforderlich, wenn es darum geht, hinsichtlich der Energiequelle variabel zu sein.

Hiervon ausgehend ist es daher die Aufgabe der vorliegenden Erfindung, mit einfachen und kostengünstigen Mitteln einen Backofen eingangs erwähnter Art zu schaffen, dessen Heizenrichtung schnell und einfach auf verschiedene Energiequellen umrüstbar ist.

Diese Aufgabe wird erfindungsgemäß dadurch gelöst, daß die Wärmequelle auf einem schubladenartigen Träger aufgenommen ist, der als wahlweise mit mindestens einem elektrischen Heizstab oder einem Brenner bestückter Wechseleinsatz in gehäuseseitig stationär angeordnete Führungen einschiebbar ist.

Diese Maßrahmen ermöglichen eine einfache Anpassung der Beheizungsart an die Verhältnisse des Einzelfalls. Hierzu sind lediglich Wechseleinsätze mit unterschiedlicher Bestückung zu verwenden. Wo bereits eine entsprechende elektrische Installation besteht, kann der mit einem oder mehreren Heizstäben bestückte Wechseleinsatz eingeschoben werden. Wo dies noch nicht der Fall ist, kann der mit einem Brenner, vorzugsweise in Form eines aus einer Flasche oder einem Tank mit Brennstoff versorgbaren Gasbrenners bestückte Wechseleinsatz Verwendung finden. Auch eine Umrüstung von elektrischer Beheizung auf Gasbeheizung oder umgekehrt ist hierbei problemlos möglich. Hierzu wird lediglich der eine Wechseleinsatz abgenommen und ein anderer in Stellung gebracht. Die durch die erfindungsgemäßen Maßnahmen gewärleistete schnelle Austauschbarkeit der Wechseleinsätze gewährleistet aber auch eine hohe Service- und Reparaturfreundlichkeit. Im Falle eines Defekts des Brenners oder der Heizstäbe kann der betreffende Wechseleinsatz einfach herausgenommen und durch einen neuen, von derselben Sorte ersetzt werden. Die hierbei sich ergebenden Stillstandszeiten lassen sich auf diese Weise auf ein Minimum drücken. Die mit den erfindungsgemäßen Maßnahmen erzielbaren Vorteile sind somit in der Erzielung einer hohen Standortunabhängigkeit sowie einer hohen Reparatur- und Servicefreundlichkeit und damit insgesamt in einer hohen Wirtschaftlichkeit zu sehen.

Gemäß einer vorteilhaften Ausgestaltung der übergeordneten Maßnahmen können die den Wechseleinsätzen zugeordneten Führungen in einem unterhalb des Backraums angeordneten, der Heizeinrichtung zugeordneten Maschinenraum symmetrisch zur Backraummittellängsebene so angeordnet sein, daß die Wärmequelle den Boden des Backraums mit vorzugsweise gleichbleibendem Abstand unterfaßt. Die Bereitstellung eines en Backraum unterfassenden, der Heizeinrichtung zugeordneten Maschinenraum gewährleistet in vorteilhafter Weise eine kompakte Bauweise des gesamten Backofens sowie eine leichte Zugänglichkeit der den Wechseleinsätzen zugeordneten Führungen. Gleichzeitig ergibt sich hierbei in vorteilhafter Weise eine Direktbeheizung des Backraumbodens. Dieser kann daher vorteilhaft als Schwadenwanne ausgebildet sein, die zur Bildung sogenannter Schwaden, d. h. Dampf, mit Wasser beaufschlagt werden kann. Infolge der Direktbeheizung dieser Schwadenwanne ist hierbei in vorteilhafter Weise eine Schwadenerzeugung ohne Luftbewegung, also bei stehendem Gebläse, möglich, was zur Vermeidung eines Aufreißens der äußeren Kruste des Backguts erwünscht ist. Gleichzeitig ist hierbei eine einfache Reinigung der mit Wasser beaufschlagten Verdampfungsflächen möglich. Infolge der mittigen Anordnung der Wärmequelle, die aufgrund ihres Einschubs in den den Backraum unterfassenden Maschinenraum auch vergleichsweise langgestreckt ausgebildet sein kann, läßt sich ferner eine vergleichsweise gleichmäßige Beheizung des Backraums auf seiner ganzen Länge erreichen, was sich vorteilhaft auf die Erzielung von gleichmäßig durch gebackenem Backgut auswirkt und damit die Bedienung erleichtert.

Gemäß einer weiteren vorteilhaften Ausgestaltung der überrgeordneten Maßnahmen können die den Wechseleinsätzen zugeordneten Führungen an den einander zugewandten Gehäuselängsseiten von zwei im Maschinenraum mit Abstand Parallel nebeneinander angeordneten, über backraumseitige Schlitze mit den Backraum flankierenden Luftschächten verbundenen Gebläsen angebracht sein, die vorzugsweise als gegenläufig antreibbare, taktweise umschaltbare Querstromventilatoren ausgebildet sein können. Diese Maßnahmen ergeben eine besonders kompakte Bauweise und eine besonders einfache und zuverlässige Aufhängung der den Wechseleinsätzen zugeordneten Führungen. Gleichzeitig ermöglichen diese Maßnahmen auch eine einfache, gerade Luftführung über die jeweilige Wärmequelle hinweg, so daß sich nur geringe Widerstände und Verluste ergeben. Die Verwendung von Querstromventilatoren wirkt sich ferner vorteilhaft auf die Verteilung der Luftströmung auf die gesamte Maschinenraum- bzw. Backraumlänge aus, und trägt damit in Verbindung mit den weiter oben geschilderten Maßnahmen wesentlich zur Erzielung einer gleichmäßigen Beheizung des Backraums auf seiner ganzen Länge bei.

Eine weitere zweckmäßige Maßnahme kann darin bestehen, daß die als Wechseleinsätze ausgebildeten, schubladenartigen Träger im Bereich ihrer Längsseiten nach außen weisende Randleisten aufweisen und hiermit in die Führungen bildende Einfahrschlitze einschiebbar sind. Hierbei ergibt sich auf einfache Weise eine zuverlässige Sicherung der jeweils in Stellung gebrachten Wechseleinheit sowie eine leichte Auswechselbarkeit.

Vorteilhaft können die Führungen durch an die Gebläsegehäuse angesetzte Doppelleisten ausgebildet sein. Diese Maßnahme bietet in vorteilhafter Weise die Möglichkeit, den jeweils oberen Schenkel der vorgesehenen Doppelleisten einfach als den benachbarten Randbereich des in Stellung gebrachten Wechseleinsatzes übergreifendes Leitblech auszubilden, was insbesondere bei Verwendung des mit einem Brenner bestückten Wechseleinsatzes zur Stabilisierung und Fokusierung der Flamme erwünscht sein kann. In weiterer zweckmäßiger Ausgestaltung kann der mit einem Brenner bestückte, schubladenartige Träger im Bereich seines Bodens eine vom Brenner übergriffene Luftansaugausnehmung aufweisen. Hierdurch ist sichergestellt, daß die vom Brenner benötigte Verbrennungsluft problemlos aus dem Maschinenraum abgesaugt werden kann, der zweckmäßig über eine rückseitig vorgesehene Lochplatte strömungsmäßig mit der Umgebung verbunden sein kann.

Eine weitere vorteilhafte Maßnahme kann ferner darin bestehen, daß der einer elektrischen Beheizung zugeordnete Wechseleinsatz mit mehreren, seitlich und in der Höhe gegeneinander versetzten, U-förmig gebogenen Heizstäben bestückt ist, die zweckmäßig mit ihren Enden an einer Stirnwand des zugeordneten schubladenartigen Trägers befestigt sein können. Hierbei ergeben sich ein einfacher Aufbau sowie eine einfache Installation.

Weitere zweckmäßige Ausgestaltungen und vorteilhafte Weiterbildungen der übergeordneten Maßnahmen sind in den restlichen Unteransprüchen angegeben.

Nachstehend wird ein Ausführungsbeispiel der Erfindung anhand der Zeichnung näher erläutert.

In der Zeichnung zeigen:

Figur 1 einen Querschnitt durch einen erfindungsgemäßen Sicht- und Duftbackofen, bei dem ein mit einem Gasbrenner bestückter Wechseleinsatz in Stellung gebracht ist,

Figur 2 einen Längsschnitt durch die Anordnung gemäß Figur 1,

Figur 3 einen Querschnitt durch denselben Sicht- und Duftbackofen mit in Stellung gebrachtem, mit elektrischen Heizstäben bestücktem Wechseleinsatz und

Figur 4 einen Längsschnitt durch die Anordnung gemäß Figur 3.

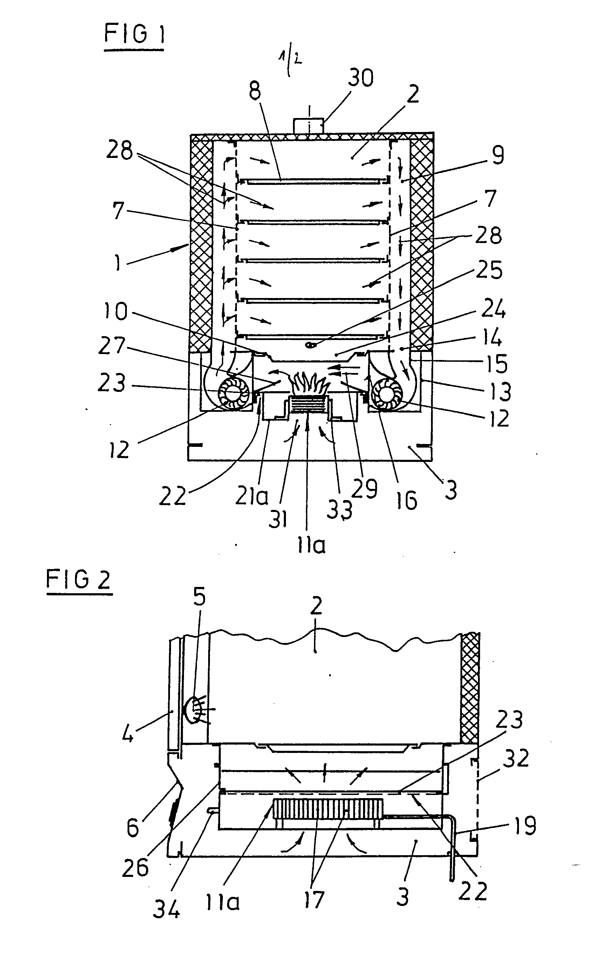

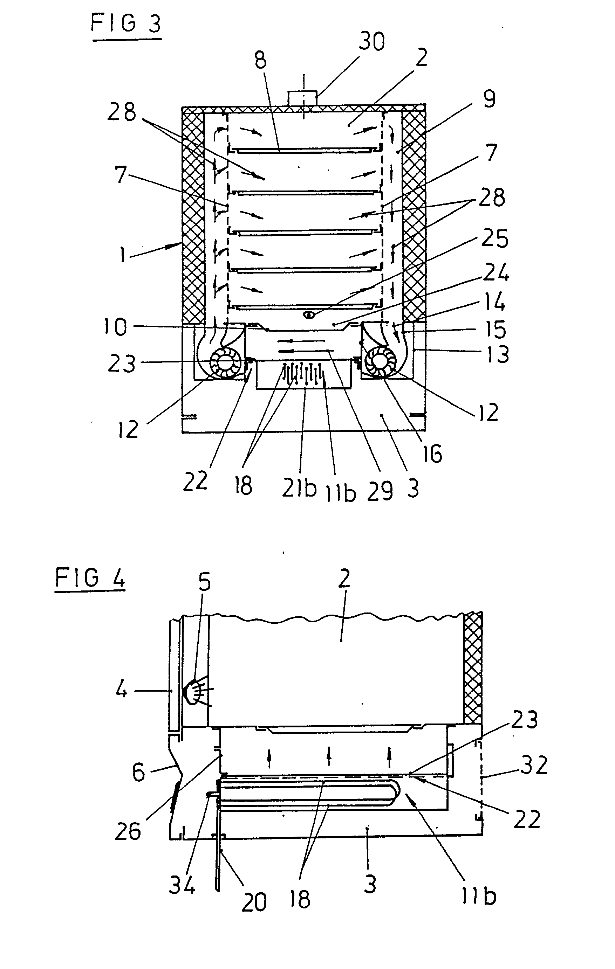

Der der Erfindung zugrundeliegende Sicht- und Duftbackofen besteht, wie die Figuren 1 und 3 anschaulich erkennen lassen, aus einem kastenförmigen Gehäuse 1, das in seinem oberen Bereich einen Backraum 2 und in seinem unteren Bereich einen den Backraum 2 unterfassenden Maschinenraum 3 enthält. Der Backraum 2 ist, wie die Figuren 2 und 4 zeigen, im Bereich seiner Frontseite durch eine schwenkbare Türe 4 verschließbar und mittels in der Türe benachbarten, seitlichen Nischen angeordneten Lampen 5 blendfrei beleuchtbar. Der Maschinenraum 3 ist frontseitig durch einen abnehmbaren Deckel 6 verschlossen. Im Bereich der Seitenwandungen 7 des Backraums 2 sind mit Abstand übereinander angeordnete Auflageleisten zur Aufnahme von ein- und ausschiebbaren Backblechen 8 angeordnet, auf die das Backgut aufgelegt wird. Die Seitenwandungen 7 des Backraums 2 werden durch Lochbleche gebildet, deren Löcher eine Strömungsverbindung zwischen den Backraum 2 und diesen flankierenden, seitlichen Luftschächten 9 darstellen.

Im Maschinenraum 3 ist eine den Boden 10 des Backraums 2 etwa mittig unterfassende, in Richtung der Backraum- bzw. Maschinenraumtiefe längliche Heizquelle 11a bzw. 11b vorgesehen, die von zwei mit Abstand parallel nebeneinander stationierten, symmetrisch zur Ofenmittellängsebene angeordneten Ventilatoren 12 flankiert ist. Die Ventilatoren 12 sind als langgestreckte, lotrecht zur Frontseite in den Maschinenraum hineinragende, praktisch über die ganze Backraumtiefe durchgehende Querstromventilatoren ausgebildet, die jeweils einen den Backraum 2 flankierenden Luftschacht 9 untergreifen. Das Gehäuse 13 der beiden Ventilatoren 12 ist jeweils an der mit den Luftschächten 9 zugeordneten Eintrittsschlitzen 14 versehenen Trennwand zwischen Backraum 2 und Maschinenraum 3 aufgehängt. Die Ventilatoren 12 sind mit an die Eintrittsschlitze 14 angeschlossenen Anschlußstutzen 15 versehen. Die von den Anschlußstutzen 15 abgewandten zweiten Stutzen 16 der Ventilatoren sind einander, d. h. dem die Wärmequelle 11a bzw. 11b aufnehmenden Zwischenraum zwischen den beiden Ventilatoren 12 zugewandt.

Mit Hilfe der Heizquelle 11a bzw. 11b wird die durch die Ventilatoren 12 über den Backraum 2 umgewälzte Luft beheizt. Die Ventilatoren 12 werden zur Bewerkstelligung der Luftumwälzung gegenläufig angetrieben und taktweise umgeschaltet, so daß im Wechsel jeweils der eine Ventilator die von der Heizquelle 11a bzw. 11b abgesaugte Luft in den Backraum 2 einspeist und der andere Ventilator saugseitig am Backraum 2 liegt und die hieraus abgesaugte Luft der Heizquelle 11a bzw. 11b zuführt. Zur Bewerkstelligung einer gleichmäßigen Beaufschlagung des gesamten Backraumquerschnitts können im Bereich der seitlichen Luftschädhte 9 hier nicht näher dargestellte Leitbleche angeordnet sein. Gleichzeitig zu dieser Warmluftbeheizung des Backraums 2 ergibt sich hierbei aber auch eine direkte Strahlungsbeheizung des von der Wärmequelle 11a bzw. 11b unterfaßten Backraumbodens 10.

Die den Figuren 1 und 2 zugrundeliegende Wärmequelle 11a ist als lang-gestreckter Brenner in Form eines Gasbrenners mit mehreren, hintereinander angeordneten Brennerzellen 17 ausgebildet. Die den Figuren 3 und 4 zugrundeliegende Wärmequelle 11b ist als langgestreckter elektrischer Heizwiderstand mit mehreren lotrecht zur Frontplatte verlaufenden, nebeneinander angeordneten Heizstäben 18 ausgebildet. Der Gasbrenner 17 ist über eine durch einen Schlauch oder dergleichen gebildete, aus dem Maschinenraum 3 herausgeführte Versorgungsleitung 19 mit einer ausserhalb des Maschinenraums 3 angeordneten Gasflasche bzw. einem Gastank etc. verbindbar. Die Heizstäbe 18 sind über ein bei 20 angedeutetes, aus dem Maschinenraum 3 herausgeführtes Kabel mit einer Stromquelle verbindbar. Der sonstige Aufbau der Anordnungen gemäß Figuren 1 und 2 und Figuren 3 und 4 ist praktisch völlig identisch. Zur Bewerkstelligung einer einfachen Austauschbarkeit der Wärmequellen 11a bzw. 11b sind diese jeweils auf einem wannenförmigen, einen Wechseleinsatz bildenden Träger 21a bzw. 21b aufgenommen, der nach Art einer Schublade von der Frontseite her parallel zu den Ventilatoren 12 in den von diesen begrenzten Zwischenraum ein schiebbar ist Zum Ein- bzw. Ausschieben eines Wechsel einsatzes 21a bzw. 21b wird die den Maschinenraum 3 frontseitig verschließende Klappe 6 abgenommen. Zur Aufnahme des jeweils in Stellung zu bringenden Wechseleinsatzes 21a bzw. 21b sind im Maschinenraum stationär angeordnete, symmetrisch zur Ofenmittellängsebene positionierte Führungen 22 vorgesehen. Die Wechseleinsätze 21a bzw. 21b sind mit untereinander gleichen, den stationären, maschinenraumseitigen Führungen 22 zugeordneten Gegenführungen 23 versehen, so daß jeder Wechseleinsatz 21a bzw. 21b in jedem Maschinenraum 3 schnell und sicher in Stellung gebracht werden kann. Die Führungen 22 und Gegenführungen 23 sind so angeordnet, daß der Brenner 17 bzw. die Heizstäbe 18 den Backraumboden 10 mit auf ihrer ganzen Länge gleichbleibendem Abstand unterfassen. In den Backraumboden 10 ist in dem von den Führungen 22 unterfaßten Bereich eine Schwadenwanne 24 eingeformt, der eine im Bereich der Backraumrückseite angeordnete, mit einer Wasserleitung verbundene Einspritzdüse 25 zugeordnet ist. Zur Beschwadung des Backraums 2 wird mit Hilfe der Einspritzdüse 25 Wasser in die von der sie jeweils unterfassenden Wärmequelle 11a bzw. 11b direkt beheizte Schwadenwanne 24 eingespritzt. Die Verdampfung erfolgt dabei unabhängig davon, ob die Ventilatoren 12 in Betrieb sind oder nicht. Die stationär im Maschinenraum 3 vorgesehenen Führungen 22 sind im dargestellten Ausführungsbeispiel einfach unterhalb der einander zugewandten zweiten Stutzen 16 der Ventilatoren 2 an den einander zugewandten Längsseiten der Ventilatorengehäuse 13 befestigt und können daher zusammen mit diese montiert werden. Die Führungen 22 sind hier als Doppelleisten ausgebildet, die einen zur Frontseite und Mittellängsebene hin offenen Einfahrschlitz mit durchgehenden Führungsflächen begrenzen. Die als Wechseleinsätze dienenden, schubladenartigen Träger 21a bzw. 21b sind zur Bildung der Gegenführungen 23 im Bereich ihrer Längskanten mit gleich weit voneinander distanzierten, nach außen weisenden Randleisten versehen, welche in die führungsseitigen Einfahrschlitze einschiebbar sind. Die schubladenartigen Träger 21a bzw. 21b sind an ihrer in Einschubrichtung hinteren Stirnseite mit einer die die Führungen 22 bildenden Leisten überragenden Stirnwand 26 versehen, die im eingefahrenen Zustand auf die vorderen Leistenenden aufläuft und einen Anschlag bildet.

Der als Brenner ausgebildeten Wärmequelle 11a können, wie am besten aus Figur 1 erkennbar ist, den zugeordneten, schubladenartigen Träger 21a im Bereich seiner seitlichen Randbereich dachförmig übergreifende Leitbleche 27 zugeordnet sein die eine gewisse Stabilisierung und Formung der vom Brenner erzeugten Flamme ergeben. Im dargestellten Ausführungsbeispiel sind zur Bildung der Leitbleche 27 einfach die oberen Schenkel der die Führungen 22 bildenden Doppelleisten dachförmig aufgebogen und gegenüber den unteren Schenkeln verbreitert. Die durch die Heizstäbe 18 gebildete Wärmequelle 11b benötigt keine derartigen Leitbleche. Hierbei werden die die Führungen 22 bildenden Doppelleisten, wie Figur 3 erkennen läßt, einfach durch zueinander parallele, zur Aufnahme der die Gegenführungen 23 bildenden Randklauen voneinander distanzierte Leisten gebildet. Im dargestellten Ausführungsbeispiel mit unterschiedlichen Oberschenkeln der die Führungen 22 bildenden Doppelleisten sind die Oberschenkel dieser Doppelleisten als abnehmbare Teile ausgebildet, die mit dem zugehörigen Wechseleinsatz ausgetauscht werden. Es wäre aber auch denkbar, die dem Brenner 17 zugeordneten Leitbleche 27 direkt an den den Brenner 17 aufnehmenden, schubladenartigen Träger 21 anzusetzen, so daß sich ein automatischer Austausch ergibt. Bei dieser zu bevorzugenden Ausführung können die Führungen 22 in der in Figur 3 angedeuteten Form ausgebildet sein, wobei sowohl die unteren als auch die oberen Leisten der die Führungen 22 bildenden Doppelleisten beim Austausch der Wechseleinsätze in Stellung bleiben können.

Die von den Ventilatoren 12 gemäß der in den Figuren 1 und 3 angedeuteten Richtungspfeile 28 über den Backraum 2 umgewälzte Luft streift, wie durch die Pfeile 29 in Figuren 1 und 3 angedeutet ist, über den Brenner 17 bzw. die Heizstäbe 18 hinweg und wird dabei erwärmt. Zur Bewerkstelligung einer möglichst gleichmäßigen Wärmeabgabe über der ganzen Brennraumtiefe besitzen der Brenner 17 bzw. die Heizstäbe 18 eine in Richtung der Backraumtiefe langgestreckte Form. Im Falle der Verwendung des mit einem Brenner bestückten Wechseleinsatzes erfolgt hierbei eine Vermischung des durch die Ventilatoren 12 umgewälzten Mediums mit den vom Brenner 17 erzeugten Verbrennungsgasen. Die zur Verbrennung benötigte Luft wird vom Brenner 17 aus der Umgebung angesaugt. Dieselbe Gasmenge entweicht aus dem Backraum 2 über eine hier deckenseitig angeordneten Abzugsstutzen 3. Im Falle der Verwendung eines mit Heizstäben 18 besetzten Wechseleinsatzes erfolgt der Wärmeübergang durch Strahlung und Konvektion. Die Zufuhr von Verbrennungsluft ist hierbei nicht erforderlich, so daß dementsprechend auch der Abzugsstutzen 30 geschlossen sein kann. Diesem ist daher zweckmäßig eine hier nicht näher dargestellte Absperrklappe zugeordnet.

Der mit einem Brenner bestückte Träger 21a ist, wie Figur 1 erkennen läßt, im Bereich seines Bodens mit einer vom zugeordneten Brenner übergriffenen Ausnehmung 31 versehen, über die die zur Verbrennung benötigte Luft aus dem Maschinenraum 3 abgesaugt werden kann. Dieser ist, wie am besten den Figuren 2 und 4 entnehmbar ist, im Bereich seiner Rückseite über die Löcher einer Lochplatte 32 mit der Umgebung verbunden. Der die Wärmequelle 11a bildende Brenner kann auf dem Boden des zugeordneten Trägers 21a aufliegen. Im dargestellten Ausführungsbeispiel ist der Brenner durch Stützen 33 vom Boden distanziert, wodurch sich der gewünschte Abstand zum Backraumboden 10 einstellen und gleichzeitig eine gute Verteilung der angesaugten Verbrennungsluft auf die gesamte Brennerlänge erreichen läßt. Der mit Heizstäben 18 bestückte Träger 21b benötigt keine Luftansaugausnehmung und kann daher, wie Figur 3 zeigt, mit einem geschlossenen Boden versehen sein. Die Heizstäbe 18 sind, wie Figur 4 anschaulich zeigt, als U-förmige Bügel ausgebildet, die mit ihren Enden an einer Stirnwand des zugeordneten, schubladenartigen Trägers 21b befestigt sind. Zur Vermeidung gegenseitiger Kollision sowie zur Erzielung eines möglichst guten Wärmeübergangs sind die die Heizstäbe 18 bildenden U-förmigen Bügel seitlich und höhenmäßig gegeneinander versetzt.

Die vorstehenden Ausführungen zeigen, daß die Backöfen gemäß Figuren 1 und 2 sowie Figuren 3 und 4 trotz unterschiedlicher Beheizung praktisch identischen Aufbau aufweisen und sich lediglich in dem in Stellung gebrachten Wechseleinsatz unterscheiden. Die schubladenartigen Träger 11a bzw. 11b können zur Erleichterung der Handhabung mit einem Griff 34 versehen sein.

## Patentansprüche

1. Backofen, insbesondere Sicht- und Duftbakkofen, mit einem Gehäuse (1), das einen durch eine Türe (4) verschließbaren Backraum (2) und eine über mindestens einen Luftschacht (9) hiermit verbundene, mindestens ein Gebläse (12) und eine Wärmequelle (11a bzw. 11b) aufweisende Heizeinrichtung umschließt, dadurch gekennzeichnet, daß die Wärmequelle (11a bzw. 11b) auf jeweils einem schubladenartigen Träger (21a bzw. 21b) aufgenommen ist, der als wahlweise mit mindestens einem elektrischen Heizstab (18) oder einem Brenner (17) bestückter Wechseleinsatz in gehäuseseitig stationär angeordnete Führungen (22) einschiebbar ist.

2. Backofen nach Anspruch 1, dadurch gekennzeichnet, daß die den als Wechseleinsätze ausgebildeten Trägern (11a bzw. 11b) zugeordneten Führungen (22) in einem unterhalb des Backraums (2) angeordneten, der Heizeinrichtung zugeordneten Maschinenraum (3) symmetrisch zur Ofenmittellängsebene so angeordnet sind, daß die vorzugsweise eine in Richtung der Ofenmittellängsebene langgestreckte Form aufweisende Wärmequelle (11a bzw. 11b) den Boden (10) des Backraums (2) mit vorzugsweise gleichbleibendem Abstand unterfaßt.

3. Backofen nach einem der vorhergehenden Ansprüche, dadurch gekennzeichnet, daß der Boden (10) des Backraums (2) in dem von den gehäuseseitigen Führungen (22) unterfaßten Bereich als vorzugsweise abnehmbare Schwadenwanne (24) ausgebildet ist, der eine Einspritzdüse (25) zugeordnet ist.

4. Backofen nach einem der vorhergehenden Ansprüche, dadurch gekennzeichnet, daß die den schubladenartigen Trägern (21a bzw. 21b) zugeordneten Führungen (22) an den einander zugewandten Gehäuselängsseiten von zwei im Maschinenraum (3) mit Abstand parallel nebeneinander angeordneten, über backraumseitige Schlitze (14) mit dem Backraum (2) flankierenden Luftschächten (9) verbundenen Gebläsen (12) angebracht sind, die vorzugsweise gegenläufig antreibbar, taktweise umschaltbar und als in Richtung der Ofenmittellängsebene langgestreckte Querstromventilatoren ausgebildet sind, wobei die gehäuseseitigen Führungen (22) vorzugsweise unterhalb der Ein- bzw. Auslaßquerschnitte dieser Querstromventilatoren angeordnet sind.

5. Backofen nach einem der vorhergehenden Ansprüche, dadurch gekennzeichnet, daß die als Wechseleinsätze ausgebildeten, schubladenartigen Träger (21a bzw. 21b) im Bereich ihrer Längsseiten nach außen weisende, den Führungen (22) zugeordnete Gegenführungen (23) bildende Randleisten aufweisen und daß die vorzugsweise durch an das jeweils zugeordnete Gebläsegehäuse (13) angesetzte Doppelleisten mit vorzugsweise auswechselbarem oberem Schenkel gebildeten Führungen (22) durchgehende Führungsflächen vorzugsweise. in Form jeweils eines Einfahrschlitzes aufweisen.

6. Backofen nach einem der vorhergehenden Ansprüche, dadurch gekennzeichnet, daß dem mit der durch einen Brenner gebildeten Wärmequele 11a bestückten Träger (21a) seine seitlichen Randbereiche dachförmig übergreifende Leitbleche (27) zugeordnet sind, die vorzugsweise als obere, lösbar angeordnete Schenkel der die Führungen (22) bildenden Doppelleisten ausgebildet sind.

7. Backofen nach einem der vorhergehenden Ansprüche, dadurch gekennzeichnet, daß der mit der durch einen Brenner gebildeten Wärmequelle (11a) bestückte Träger (21a) im Bereich seines Bodens eine vom Brenner übergriffene Luftansaugausnehmung (31) aufweist und daß die Wärmequelle (11a) bildende Brenner über seitlich angebrachte Stützen (33) vom Boden des zugeordneten schubladenartigen Trägers (21a) distanziert ist.

8. Backofen nach einem der vorhergehenden Ansprüche, dadurch gekennzeichnet, daß mit mindestens einem elektrischen Heizstab (18) bestückte, schubladenartige Träger (11b) einen geschlossenen Boden aufweist, und daß die elektrisch beheizbare Wärmequelle (11b) vorzugsweise mehrere, seitlich und in der Höhe gegeneinander versetzte, vorzugsweise U-förmig gebogene, zur Ofenmittellängsebene parallele Heizstäbe (18) gebildet wird, die mit ihren Enden an einer Stirnwand des zugeordneten schubladenartigen Träger (21b) befestigt sind.

9. Backofen nach einem der vorhergehenden Ansprüche, dadurch gekennzeichnet, daß die jeweils einen Wechseleinsatz bildenden, schubladenartigen Träger (21a bzw. 21b) im Bereich ihrer in Einschubrichtung hinteren Seite eine Stirnwand (26) aufweisen, die die seitlichen Führungen (22) in Form eines Anschlags überragt.

10. Backofen nach einem der vorhergehenden Ansprüche, dadurch gekennzeichnet, daß der den Backraum (2) untergreifende Maschinenraum (3) im Bereich seiner in Einschubrichtung der Wechseleinsätze hinteren Frontseite durch eine abnehmbare Klappe (6) verschließbar ist und im Bereich seiner in Einschubrichtung der Wechseleinsätze vorderen Frontseite eine durch eine Lochplatte (32) gebildete Begrenzung aufweist und daß im Bereich der Decke des Backraums (2) ein vorzugsweise absperrbarer Abzugstutzen (30) vorgesehen ist.

**Revendications**

1. Four de boulangerie, notamment du type permettant de voir et de sentir la cuisson, pourvu d'un boîtier (1) qui entoure une chambre de cuisson (2) fermée par une porte (4) et un dispositif de chauffage relié à cette chambre par au moins un conduit d'air (9) et comportant au moins un ventilateur (12) et une source de chaleur (11a, 11b), caracterise en ce que chaque source de chaleur (11a, 11b) est montée sur un support respectif en forme de tiroir (21a, 21b) constituant une unité interchangeable équipée à choix d'au moins un corps de chauffe électrique (18) ou d'un brûleur (17) et agencée pour être insérée dans des guides (22) stationnaires par rapport au boîtier.

2. Four selon la revendication 1, caractérisé en ce que les guides (22) recevant les supports (11a, 11b) constituant des unités interchangeables sont disposés symétriquement par rapport à un plan longitudinal médian du four, dans une chambre des machines (3) située au-dessous de la chambre de cuisson (2) et destinée à recevoir le dispositif de chauffage, de sorte que la source de chaleur (11a, 11b), ayant de préférence une forme allongée dans la direction dudit plan longitudinal médian, s'étend sous le fond (10) de la chambre de cuisson (2), de préférence à une distance constante de celui-ci.

3. Four selon l'une des revendications précédentes, caractérisé en ce que le fond (10) de la chambre de cuisson (2), dans la zone sous laquelle s'étendent lesdits guides stationnaires (22), forme un bac d'évaporation (24) qui est de préférence amovible et auquel est associée une buse de pulvérisation (25).

4. Four selon l'une des revendications précédentes, caractérisé en ce que lesdits guides (22) destinés aux supports en forme de tiroir (21a, 21b) sont montés sur les faces longitudinales mutuellement opposées des boîtiers de deux ventilateurs (12) disposés parallèlement et à distance l'un de l'autre dans la chambre des machines (3) et reliés par des fentes (14) à des conduits d'air verticaux (9) qui flanquent la chambre de cuisson (2), ces ventilateurs étant de préférence actionnés dans des sens opposés, enclenchables cycliquement et formés par des ventilateurs à flux transversal qui sont allongés dans la direction dudit plan longitudinal médian, lesdits guides (22) étant disposés de préférence en dessous des entrées ou sorties de ces ventilateurs à flux transversal.

5. Four selon l'une des revendications précédentes, caractérisé en ce que les supports en forme de tiroir (21a, 21b), constituant des unités interchangeables, comportent sur leurs côtés longitudinaux des rebords dirigés vers l'extérieur et formant des supports (23) qui correspondent aux guides (22), et en ce que lesdits guides (22), formés de préférence par des profilés doubles montés sur le boîtier du ventilateur correspondant (13) et ayant de préférence une aile supérieure amovible, comportent des surfaces de guidage continues, de préférence sous la forme d'une fente de coulissement.

6. Four selon l'une des revendications précédentes, caractérisé en ce qu'il comporte, en correspondance du support (21a) équipé d'un brûleur en guise de source de chaleur (11a), des tôles déflectrices (27) disposées en toit de façon à surplomber les bords latéraux du support et formées de préférence par des ailes supérieures amovibles des profilés doubles formant lesdits guides (22).

7. Four selon l'une des revendications précédentes, caractérisé en ce que le support (21a) équipé d'un brûleur en guise de source de chaleur (11a) comporte dans son fond une ouverture d'admission d'air (31), surplombée par le brûleur, et en ce que le brûleur formant la source de chaleur (11a) est maintenu à distance du fond du support en forme de tiroir (21a) au moyen d'appuis (33) disposés latéralement.

8. Four selon l'une des revendications précédentes, caractérisé en ce que le support en forme de tiroir (11b) équipé d'au moins un corps de chauffe électrique (18) comporte un fond fermé, et en ce que la source de chaleur à chauffage électrique (11b) est formée de préférence par plusieurs corps de chauffe (18) disposés parallèlement audit plan horizontal médian, avec des décalages mutuels en largeur et en hauteur, et de préférence recourbés en forme de U, les extrémités de ces corps de chauffe étant fixées à une paroi frontale de leur support en forme de tiroir (21b).

9. Four selon l'une des revendications précédentes, caractérisé en ce que les supports en forme de tiroir (21a, 21b) constituant des unités interchangeables comportent, à leur extrémité arrière par rapport au sens d'insertion, une paroi frontale (26) qui recouvre les guides latéraux (22) et forme ainsi un arrêt.

10. Four selon l'une des revendications précédentes caractérisé en ce que la chambre des machines (3) située sous la chambre de cuisson (2) est fermée par une trappe amovible (6) à son extrémité frontale située à l'arrière par rapport au sens d'introduction des unités interchangeables et comporte une paroi formée par une plaque perforée (32) à son extrémité frontale située à l'avant par rapport au sens d'introduction des unités interchangeables, et en ce qu'une tubulure d'évacuation (30), de préférence équipée l'une fermeture, est prévue dans la zone du plafond de la chambre de cuisson (2).

## Claims

1. An oven and more especially a display and aroma producing oven, comprising a housing (1), which encloses a baking space (2) able to be shut off by a door (4) and a heating device which is connected with the baking space by way of at least one air passage (9), and has at least one blower (12) and a heat source (11a and 11b, respectively) characterized by the mounting of the heat source (11a and, respectively, 11b) on a drawer-like carrier (21a and, respectively 21b), which is in the form of an interchangeable insert which may be selectively fitted with at least one electrical heating element (18) or with a burner (17) in guides (22) arranged in a stationary manner in the housing.

2. The oven as claimed in claim 1, characterized in that the guides (22) associated with the carriers (11a and, respectively, 11b) in the form of interchangeable inserts are so placed in a machine space (3) located under the baking space (2) and associated with the heating means symmetrically in relation to the median longitudinal plane of the oven that the heat source (11a and, respectively, 11b) preferably having a form which is elongated in the direction of the said median longitudinal plane of the oven, fits under the floor (10) of the baking space (2) with a preferably even clearance therebetween.

3. The oven as claimed in any one of the preceding claims, characterized in that the floor (10) of the baking space (2) is formed in the part, having the housing guides (22) fitted under it, as a preferably removable odor trough (24), which is provided with an injection nozzle (25).

4. The oven as claimed in any one of the preceding claims, characterized in that the guides (22) associated with the drawer-like carriers (21a and, respectively, 21b) are secured on the facing longitudinal housing sides of two blowers (12) which are placed side by side in the machine space (3) in parallelism with a spacing between them and connected via slots (14) with air passages (9) flanking the baking space, such blowers being preferably able to be rotated in opposite directions and able to be switched over in turn and being in the form of transverse flow blowers elongated in the direction of the longitudinal median plane of the oven, the guides (22) fixed to the housing preferably being arranged under the intake and output cross sections of such transverse flow blowers.

5. The oven as claimed in any one of the preceding claims, characterized in that the drawer-like carriers (21a and, respectively, 21b) designed in the form of interchangeable inserts have outwardly turned counter-guides (23), formed by edge rails, associated with the guides (22) and in that the guides (22) formed by double rails, mounted on the respectively associated blower housing (13) and formed with an upper limb (which is preferably replaceable), have continuous guide faces, preferably in the form of a respective entry slot.

6. The oven as claimed in any one of the preceding claims, characterized in that the carrier (21a) equipped with a heat source (11a) in the form of a burner, has associated sheet metal guides (27) overlapping its lateral edge parts in the form of a roof, such guides (27) preferably being formed as upper detachably arranged limbs of the double rails forming the guides (22).

7. The oven as claimed in any one of the preceding claims, characterized in that the carrier (21a) equipped with a heat source (11a) in the form of a burner, has an air draw-in recess (31) overlapped by the burner near its floor and in that the burner forming the heat source (11a) is spaced from the floor of the associated drawer-like carrier (21a) by laterally placed supports (33).

8. The oven as claimed in any one of the preceding claims, characterized in that the drawer-like carrier (11b) equipped with at least one electrical heating element (18) has a continuous, unbroken floor, and in that the electrically heated heat source (11b) is preferably formed by a plurality of preferably U-like heating elements (18) which are offset laterally and vertically in relation to each other and are preferably parallel to the median longitudinal plane of the oven, and such elements (18) are attached at their ends to an end wall of the associated drawer-like carrier (21b).

9. The oven as claimed in any one of the preceding claims, characterized in that the drawer-like carriers (21a and, respectively, 21b) respectively forming an interchangeable insert have an end wall (26) adjacent to their side which is to the rear in the direction of insertion and such end wall (26) projects beyond the lateral guides (22) in the form of an abutment.

10. The oven as claimed in any one of the preceding claims, characterized in that the machine space (3) located under the baking space (2), is able to be shut off by a removable door (6) adjacent to its front side which is to the rear in the direction of insertion of the interchangeable inserts and adjacent to its other front side relative to the direction of insertion of the interchangeable inserts has a limiting wall formed by a perforated plate (32) and in that adjacent to the top of the baking space (2) there is a flue connection (30) which is preferably able to be shut off.

FIG 1

FIG 2

FIG 3

FIG 4